Europäisches Patentamt

European Patent Office

Office européen des brevets

(11) Publication number: **0 124 920**
**B1**

(12) **EUROPEAN PATENT SPECIFICATION**

(45) Date of publication of patent specification: **07.02.90**

(21) Application number: **84200441.8**

(22) Date of filing: **27.03.84**

(51) Int. Cl.⁵: **B 01 D 3/20**

(54) Apparatus for treating mixtures of liquid and gas.

(30) Priority: **08.04.83 GB 8309633**

(43) Date of publication of application:
**14.11.84 Bulletin 84/46**

(45) Publication of the grant of the patent:
**07.02.90 Bulletin 90/06**

(84) Designated Contracting States:
**BE DE FR GB IT NL**

(56) References cited:
**EP-A-0 048 508**
**EP-A-0 083 811**
**US-A-1 983 762**
**US-A-2 594 490**
**US-A-3 296 779**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Paardekooper, Stephanus
Badhuisweg 3
NL-1031 CM Amsterdam (NL)**
Inventor: **Pek, Johan Jan Barend
Badhuisweg 3
NL-1031 CM Amsterdam (NL)**

(74) Representative: **Aalbers, Onno et al
P.O. Box 302
NL-2501 CH The Hague (NL)**

## Description

The present invention relates to an apparatus for treating mixtures of liquid and gas comprising a housing surrounding at least one normally substantially vertically extending tubular wall defining a substantially tubular inner space and a substantially annular outer space within the housing, a topwall positioned above the tubular wall and confining said inner space and said outer space in upward direction, inlet means for supplying a mixture of gas and liquid into the lower part of the inner space, means arranged in the inner space for imparting a rotary motion to the mixture to separate the gas and liquid, outlet means for separately discharging gas and liquid from the inner space comprising a primary gas outlet tube, arranged substantially coaxially with the tubular wall, passing through the topwall and having the lower end thereof positioned inside the inner space and at least one liquid discharge opening arranged in the tubular wall and outlet means for separately discharging gas and liquid from the outer space comprising at least one secondary gas outlet tube through the topwall and a liquid discharge opening through the housing, the apparatus further comprising a layer of flow impinging means for separating liquid from gas said layer being arranged above the upper end of the secondary gas outlet tube, wherein the primary gas outlet tube closely fits in an opening extending substantially vertically through said layer.

Such an apparatus is described in European patent application, publication No. 00 83 811 (priority date: 27.11.81; publication date: 20.07.83). The apparatus described in this document is provided with means for treating the gas flow from the secondary gas outlet tube(s) for further drying said gas prior to combining the primary gas flow and the secondary gas flow, in order to obtain a substantially liquid free gas even at high liquid loads and/or flow velocities.

The increasing demand for gas for domestic and industrial use is attended with a growing need for installations able to treat the raw gas for making the gas suitable for use. One of the necessary treatments is drying the gas in order to improve the thermal efficiency and to minimize the risk of corrosion in gas-transport pipelines. An increase of the demand for gas is therefore accompanied by a need for high capacity gas/liquid separation devices.

It is an object of the present invention to further improve the above-described apparatus, i.e. to provide an apparatus with still a higher separation efficiency at a given load or a higher throughput at a desired efficiency than the above-described apparatus.

To this end the apparatus according to the invention is characterized in that a fluid communication is provided for substantially laterally discharging liquid from the primary gas outlet tube into the layer of flow impinging means.

During operation of the apparatus according to the invention gas passes in swirling motion through the primary gas outlet tube, liquid present in the gas is collected on the inner surface of the tube's wall and is discharged substantially laterally from the primary gas outlet tube into the layer of flow impinging means. Thus both gas from the secondary gas outlet tube as well as gas from from the primary gas outlet tube are further dried to provide a substantially liquid-free gas flow. The apparatus can be subjected to very high gas and liquid loads without a substantial reduction of the efficiency of the apparatus. At a required efficiency a high throughput can be attained since only part of the total gas mass, namely the gas flow from the secondary gas outlet tube is forced to pass through the flow impinging means.

In the specification and in the claims the word "gas" is taken also to include "vapour". Hereinafter a tubular wall provided with means arranged in the inner space of the tubular wall for imparting a rotary motion to a fluid will be referred to as "a swirl tube".

The invention will now be further elucidated with reference to the accompanying drawings, wherein

Figure 1 shows a vertical section of the bottom part of an apparatus according to the invention for separating mixtures of liquid and gas; and

Figure 2 shows a vertical section of a second embodiment according to the invention.

It should be noted that identical elements shown in the drawings have been indicated with the same reference numeral.

Further, it is to be understood that the elements of one of the embodiments of the invention shown in the drawings may be applied individually to the other embodiments shown.

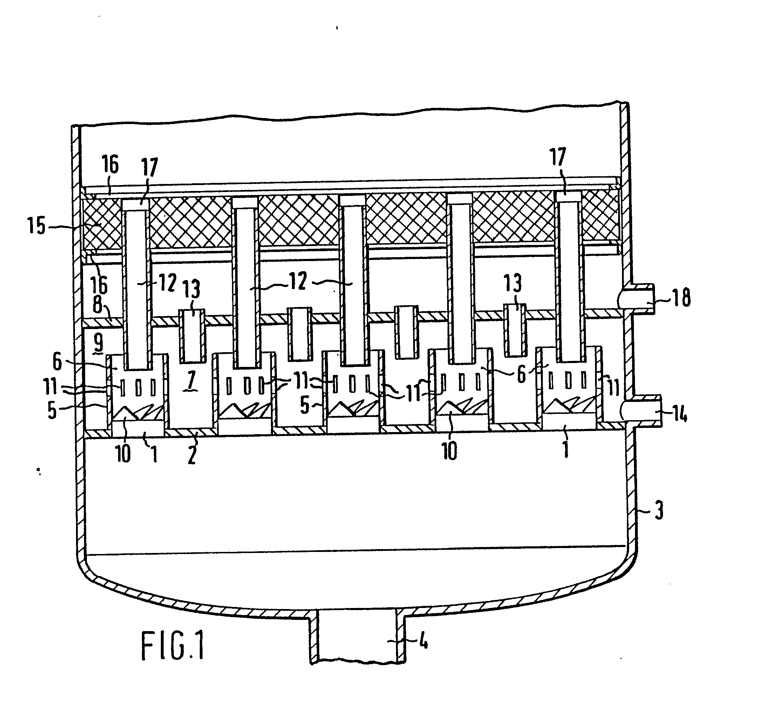

Figure 1 shows the bottom part of an apparatus according to the invention for separating mixtures of liquid and gas, having as main components a plurality of swirl tubes arranged to cooperate with a so called demister mat as will be explained hereinafter in more detail. The swirl tubes, having reference numeral 1, are arranged in openings of a substantially horizontal tray 2 mounted in a vertically extending column 3, of which only the lower part is shown. An inlet 4 for a gas/liquid mixture to be separated is provided in the bottom part of the column 3. Each swirl tube 1 is formed by a substantially vertically extending tubular wall 5 defining a substantially tubular inner space 6 and a substantially annular outer space. The outer spaces of the various swirl tubes form the outer space 7 around the swirl tubes 1, which space 7 is confined in lateral direction by the wall of column 3 and in downward direction by the tray 2. A topwall 8 extends over the cross-section of column 3 and is positioned at some distance above the tubular walls 5, thereby forming fluid passages 9 between the inner spaces 6 and the outer space 7. Each tubular wall 5 surrounds a substantially centrally positioned vane assembly 10 consisting of a number of not separately indicated stationary blades. As shown in Figure 1 these vane assemblies are positioned in the lower parts of the inner spaces 6. The upper parts of the tubular walls 5 are provided with a plurality of oblong liquid discharge openings 11, which are substantially uniformly distributed over the peripheries of said walls 5.

For the discharge of gas from the swirl tubes 1, a plurality of primary gas outlet tubes 12 extend through openings in the topwall 8. Each gas outlet tube 12 is substantially concentrically arranged relative to a swirl tube 1 and has its lower end positioned below the upper end of the relevant tubular wall 5. Apart from the primary gas outlet tubes 12, a further group of tubes, indicated with secondary gas outlet tubes 13, extends through openings in the topwall 8. These secondary gas outlet tubes 13, having their lower ends arranged below the topwall 8 are aimed to discharge gas collected in the outer space 7. The secondary gas outlet tubes 13 are preferably substantially uniformly distributed over the outer space 7 around the tubular walls 5. A discharge tube 14 for discharging liquid from the outer space is mounted in an opening of the wall of vessel 1.

The other major component of the separating equipment shown in Figure 1, is formed by a demister mat 15 arranged substantially horizontally at some distance above the topwall 8. In the shown embodiment the demister mat 15 consists of a layer of knitted or otherwise closely packed wires or fibres, clamped between supporting rings 16 secured to or otherwise supported by the column wall. For a further support of mat 15 a perforated wall, not shown, may be optionally arranged at the upper side of said mat. The demister mat 15 itself is provided with a plurality of holes 17, in which holes the upper end parts of the primary gas outlet tubes 12 closely fit. As shown in Figure 1, the upper ends of said tubes 12 are arranged below the upper, end of the demister mat 15 to allow lateral escape of liquid from said tubes into the demister mat. A distance of only about 1 cm between the upper end of the tubes 12 and the upper end of the demister mat 15 has found to be already sufficient for a proper operation of the apparatus. The upper ends of the secondary gas outlet tubes 13 should, however, be arranged below the lower end of the demister mat 15 to promote distribution of the gas flows from said tubes 13 over the whole cross section of the demister mat. For discharging the liquid, caught by the demister mat 15, from the columna liquid outlet 18 is provided in the sidewall of the column. The not shown upper part of the column is provided with an outlet for discharging substantially liquid free gas and may enclose further equipment for treating the liquid-free gas from the demister mat 15.

In operation, a mixture of liquid droplets and gas, such as wet natural gas, to be dried, is introduced into the column 3 via inlet 4 and is caused to flow into the inner spaces 6 via the open lower ends of the swirl tubes 1. In the swirl tubes the gas/liquid mixture passes through the vane assemblies 10, and is thereby brought into a rotary motion. By the imparted rotary motion the relatively heavy liquid droplets are flung outwardly, impinge and subsequently coalesce on the inner surfaces of the tubular walls 5. The liquid collected on the inner surface of each tubular wall 5 creep upwards, and the major part of the so formed liquid films will leave the inner spaces 6 mainly via the liquid discharge openings 11 and the fluid passages 9 between the tubular walls 5 and the topwall 8. The separated liquid is collected in the outer space 7 and is subsequently discharged from the column 3 via the liquid discharge tube 14.

The major part of the gaseous components of the gas/liquid mixture leaves the inner spaces 6 of the swirl tubes 1 via the primary gas outlet tubes 12. Especially at high gas loads it may happen that some of the liquid collected on the tubular wall 5 is entrained by the gas passing through the outlet tubes 12. One possibility for reducing the risk of liquid entrainment through the primary gas outlet tubes is to adjust the cross-sectional area of the primary gas outlet tubes relative to the dimensions of the tubular walls 5. It should, however, be kept in mind that reduction of the cross section of the primary gas outlet tubes will also have a negative effect in that it causes an increase of the pressure drop over the swirl tube. Especially at extremely high gas loads, this effect of pressure drop increase may play an important role.

The invention now provides a further solution for reducing liquid entrainment by the gas flow. The liquid which is entrained by the gas passing through the primary gas outlet tubes 12 will still be in a swirling motion, imparted to the liquid upon passing the vane assemblies 10. On account of the difference in specific gravity of liquid and gas the entrained liquid will therefore flow along the inner surfaces of the outlet tubes 12. Upon arrival at the upper end of said tubes 12, the centrifugal force imposed on the liquid will force the liquid to flow outwardly into the demister mat 15, which mat operates as a flow impinging layer in which the flow velocity of the fluid is suddenly reduced so that the relatively heavy liquid droplets will flow downwards, while gas entered into said mat will maintain its upward flow direction. The major part of the gas in the primary gas outlet tubes 12, will flow through the holes 17 in the demister mat 15 and will therefore hardly load said demister mat. In the above manner the gas leaving the holes 17 via the primary gas outlet tubes 12 will be substantially liquid free, even if from motives of pressure drop the cross-sectional areas of the outlet tubes have been chosen relatively large.

The separated liquid streams entering into the outer space 7 may contain minor amounts of gas, which gas is allowed to escape from the space 7 via the secondary gas outlet tubes 13. In order to enable substantially all of the liquid to leave the swirl tubes 1 via the liquid discharge openings 11 or the fluid passages 9, it is almost inevitable that, especially at low liquid loads, apart from the liquid some gas will escape from the swirl tubes via said liquid outlets. The separation in the outer space 7 is merely accomplished by specific gravity differences of the liquid and gas, and will therefore be not optimal. In order to obtain substantially liquid-free gas, the gas from the secondary outlet tubes is caused to flow through the demister mat 15 for removing entrained liquid from the gas flow. The above mentioned distribution of the gasflow over the whole available area of the demister mat helps in eliminating liquid entrainment. Since the tubes 13 have their upper ends positioned below the demister mat the gas leaving the secondary gas outlet tubes 13 will distribute itself over the cross-section of the vessel prior to entering the demister mat, so that the demister mat is substantially uniformly loaded with gas. The liquid in the gasflow will impinge on the fibres of the mat, and will separate itself from the upward gas flow due to the sudden liquid velocity reduction caused by the impact of the liquid droplets. The separated liquid will flow downwards and is withdrawn from the vessel via the liquid discharge tube 18. Liquid-free gas leaving the demister mat may be directly recovered or may be further treated in the upper part of the vessel.

Since only a minor part of the total amount of gas from the swirl tubes 1 will pass via tbe gas outlet tubes 13 through the demister mat, high total gasloads may be applied in the column without the risk of overloading and therefore liquid entrainment by the gas passing through the demister mat. On the other hand very high loads of the shown apparatus are admissible without adverse pressure drop effects, since liquid entrained by the main gas flow passing through the primary gas outlet tubes 12 is removed therefrom by means of the demister mat 15.

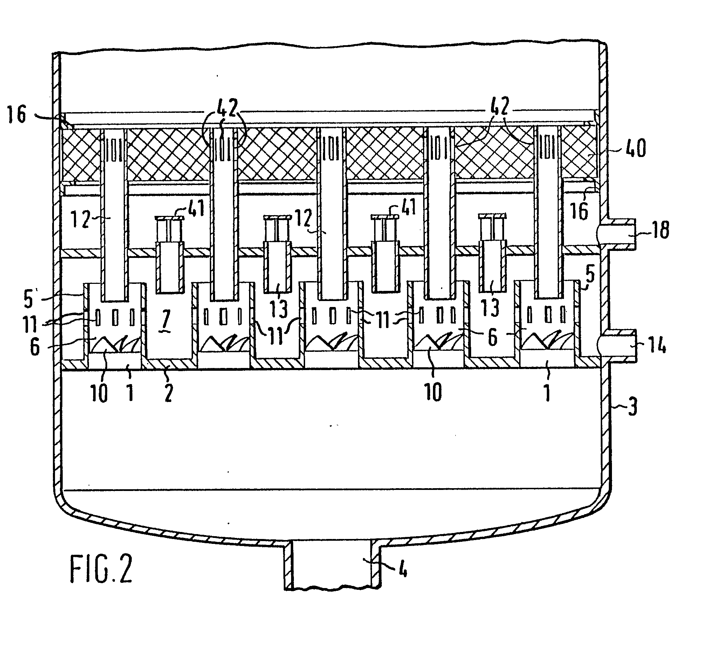

Reference is now made to Figure 2 showing a second embodiment of the invention. In this further embodiment, the demister mat forming part of the first shown embodiment is replaced by a flow impinging layer 40 consisting of a plurality of perforated walls formed by, for example, sheets of expanded metal. The walls are so arranged one above another that fluid is prevented to go straight upward through the said layer without impingement on one or more of said walls. A further difference with the first shown embodiment consists herein that between the upper ends of the secondary gas outlet tubes 13 and the flow impinging layer 40, plates 41 are arranged for causing a correct distribution of the fluid from said tubes over substantially the total cross-section of layer 40. Further, the primary gas outlet tubes 12 have their upper ends substantially flush with the upper end of layer 40. To allow liquid to pass from the interior of said tubes 12 into layer 40, the upper part of these tubes is provided with a plurality of liquid discharge openings 42, substantially uniformly distributed over the circumference of said tubes 12. A smooth outflow of the swirling liquid is obtained by disposing the openings in the direction of the swirling movement of the liquid. Liquid flowing out of the tubes 12 is caught in the layer 40, so that liquid-free gas leaves the holes 17 in the layer 40.

The presence of the distributing plates 41 in the apparatus shown in Figure 2, makes the apparatus in particular suitable for extremely high gas loads, since these plates 41 prevent local overloading of the layer 40 and promote a uniform gas distribution over the whole cross-section of layer 40. Instead of the openings 42 for liquid discharge, the upper part of the primary gas outlet tubes 12 might be formed from expanded metal, a grid or any other liquid permeably structure.

Although only two types of flow impinging means have been discussed in the above with reference to the drawings, viz a layer of closely packed wires or fibres 15 and a layer of expanded metal walls 40, other flow impinging means may be chosen, such as a plurality of layers of inclined vanes so arranged above one another as to optically mask the upper part of the vessel from its lower part in which the swirl tubes are arranged.

It should be noted that although the primary gas outlet tubes shown in the drawings have their lower ends arranged below the upper ends of the tubular walls 5 of the swirl tubes 1, in order to reduce liquid entrainment by the primary gas flow, this feature does not form an essential part of an apparatus, according to the present invention. According to the invention the primary gas is namely further treated by a demister mat to remove liquid therefrom. It will therefore be understood that especially at relatively low liquid loads the lower ends of the primary gas outlet tubes may also be arranged above the tubular walls 5.

In the shown drawings the swirl tubes are mounted in openings of a wall. It should be understood that it is also possible to arrange the swirl tubes over openings in a wall.

It should further be noted that the distributing plates 41 may be perforated or fully closed. These distributing plates 41 may be interconnected to provide a distributing tray extending over the full cross-section of the column 3.

The devices shown in the drawings may also be used in gas/liquid contact columns. To this end the swirl tubes shown in the drawings may be provided with mixing chambers, communicating with the lower ends of said swirl tubes, as described in EP-A-0.048.508. The columns should then be provided with separate inlets for liquid and gas.

## Claims

1. Apparatus for treating mixtures of liquid and gas, comprising a housing surrounding at least one normally substantially vertically extending tubular wall defining a substantially tubular inner space and a substantially annular outer space within the housing, a topwall positioned above the tubular wall and confining said inner space and said outer space in upward direction, inlet means for supplying a mixture of gas and liquid into the lower part of the inner space, means arranged in the inner space for imparting a rotary motion to the mixture to separate the gas and liquid, outlet means for separately discharging gas and liquid from the inner space comprising a primary gas outlet tube, arranged substantially coaxially with the tubular wall, passing through the topwall and having the lower end thereof positioned inside the inner space and at least one liquid discharge opening arranged in the tubular wall and outlet means for separately discharging gas and liquid from the outer space comprising at least one secondary gas outlet tube through the topwall and a liquid discharge opening through the housing, the apparatus further comprising a layer of flow impinging means for separating liquid from gas said layer being arranged above the upper end of the secondary gas outlet tube, wherein the primary gas outlet tube closely fits in an opening extending substantially vertically through said layer, characterized in that a fluid communication is provided for substantially laterally discharging liquid from the primary gas outlet tube into the layer of flow impinging means.

2. Apparatus as claimed in claim 1, wherein the upper end of the primary gas outlet tube is arranged below the upper end of the layer of flow impinging means.

3. Apparatus as claimed in claim 1 or 2, wherein the upper part of the primary gas outlet tube is provided with apertures for laterally discharging liquid into the layer of flow impinging means.

4. Apparatus as claimed in claim 3, wherein the apertures are substantially disposed in a direction corresponding with the direction of liquid flow in the primary gas outlet tube.

5. Apparatus as claimed in any one of the claims 1-4, wherein the layer of flow impinging means is formed by a layer of closely packed wires or fibres.

6 Apparatus as claimed in any one of the claims 1-4 wherein the layer of flow impinging means is formed by a plurality of perforated walls.

7. Apparatus as claimed in any one of the claims 1-4, wherein the layer of flow impinging means is formed by one or more layers of vanes inclined with respect to the main flow direction.

8. Apparatus-as claimed in any one of the claims 1-7, wherein the inlet means are in fluid communication with a mixing chamber for preparing and supplying a mixture of gas and liquid to said inlet means.

9. Apparatus-as claimed in any one of the claims 1-8, wherein a flow distributing plate is arranged between the upper end of the secondary gas outlet tube(s) and the layer of flow impinging means.

10. Apparatus as claimed in any one of the claims 1-9, wherein a plurality of tubular walls with said swirl imparting means and outlet means are mounted in or over openings of a substantially horizontal tray of a substantially vertically extending column for treating mixtures of liquid and gas.

**Patentansprüche**

1. Vorrichtung zur Behandlung von Mischungen aus Flüssigkeit und Gas mit einem Gehäuse, das wenigstens eine sich normaler weise im wesentlichen senkrecht erstreckende rohrförmige Wand umschließt, welche einen im wesentlichen rohrförmigen Innenraum und eine im wesentlichen ringförmigen Außenraum innerhalb des Gehäuses abgrenzt, einer oberen Wand, die oberhalb der rohr förmigen wand angeordnet ist und den inneren Raum und den äußeren Raum nach oben hin begrenzt, Einlässe für die Zufuhr einer Mischung aus Gas und Flüssigkeit in den unteren Teil des Innenraums, mit welchem der Mischung eine rotierende Bewegung aufgeprägt wird, um diese in Gas und Flüssigkeit zu trennen, Auslaßeinrichtungen zur getrennten Abfuhr von Gas und Flüssig- keit aus dem Innenraum mit einem ersten Gasauslaßrohr, welches im wesentlichen koaxial zur rohrförmigen Wand angeordnet ist, durch die obere Wand hindurchtritt und deren unteres Ende innerhalb des Innenraums angeordnet ist, und wenigstens einer Flüssigkeitsauslaßöffnung der rohrförmigen Wand und Auslaßein richtung zur getrennten Abfuhr von Gas und Flüssigkeit aus dem Außenraum mit wenigstens einem durch die obere Wand-reichenden zweiten Gasauslaßrohr und einer Flüssigkeitskeitsauslaßöffnung durch das Gehäuse, wobei die Vorrichtung ferner eine. Schicht aus Strömungsprallmitteln zur Trennung der Flüssigkeit von Gas aufweist, welche Schicht oberhalb des oberen Endes des zweiten Gasauslaßrohrs angeordnet ist, wobei das erste Gasauslaßrohr eng in eine sich im wesentlichen vertikal durch die Schicht erstreckende Öffnung paßt, dadurch gekennzeichnet, daß eine Fluid-Verbindung zum im wesentlichen quergerichteten Austrag der Flüssigkeit aus dem ersten Gasauslaßrohr in die Strömungsprallmittelschicht vorgesehen ist.

2. Vorrichtung nach Anspruch 1, bei der das obere Ende des ersten GasauslaßrohrsunterhalbderOberseitederStrömungsprallmittelschicht angeordnet ist.

3. Vorrichtung nach Anspruch 1 oder 2, bei der der obere Teil des ersten Gasauslaßrohrs mit Öffnungen für den quergerichteten Flüssigkeitsaustrag in die Strömungs- prallmittelschicht vorgesehen ist.

4. Vorrichtung nach Anspruch 3, bei der die Öffnungen im wesentlichen in Richtung der Strömungs richtung in dem ersten Gasauslaßrohr ausgerichtet sind.

5. Vorrichtung nach einem der Ansprüche 1 bis 4, bei welcher die Strömungsprallmittelschicht aus einer Lage eng gepackter Drähte oder Fasern gebildet ist.

6. Vorrichtung nach einem der Ansprüche 1 bis 4, bei welcher die Lage der Strömungsprallmittelschicht durch eine Vielzahl perforierte Wände gebildet ist.

7. Vorrichtung nach einem der Ansprüche 1 bis 4, bei der die Strömungsprallmittelschicht durch eine oder mehrere Lagen von gegenüber der Hauptströmungsrichtung angestellten Schaufeln gebildet ist.

8. Vorrichtung nach einem der Ansprüche 1 bis 7, bei der die Einlaßeinrichtungen mit einer Mischkammer zur Aufbereitung und zur Zufuhr einer Mischung aus Gas und Flüssig- keit in die Einlässe in Strömungsverbindung stehen.

9. Vorrichtung nach einem der Ansprüche 1 bis 8, bei der eine Strömungsverteilerplatte zwischen dem oberen Ende des/der zweiten Auslaßrohrs (-rohre) und der Strömungsprall- mittelschicht angeordnet ist.

10. Vorrichtung nach einem der Ansprüche 1 bis 9, bei der eine Vielzahl rohrförmiger Wände mit eine Wirbelströ mung erzeugenden Mitteln und den Auslaßeinrichtungen in oder über den Öffnungen einer im wesentlichen horizontalen Wanne einer im wesentlichen sich senkrecht erstreckenden Kolonne zur Behandlung von Mischungen aus Flüssigkeit und Gas angeordnet sind.

**Revendications**

1. Appareil pour traiter des mélanges de liquide et de gaz, comportant un carter entourant au moins une paroi tubulaire se prologeant normalement de façon sensiblement verticale en définissant un espace interne sensiblement tubulaire et un espace interne sensiblement annulaire à l'intérieur du carter, une cloison supérieure positionnée au-dessus de la paroi tubulaire et limitant ledit espace interne et ledit espace externe dans la direction vers le haut, des moyens de conduit d'amenée pour fournir un mélange de gaz et de liquide à la partie inférieure de l'espace annulaire, des moyens agencés dans l'espace annulaire pour conférer un mouvement rotatif au mélange afin de séparer le gaz et le liquide, des moyens de conduite d'écoulement pour évacuer séparément le gaz et le liquide de l'espace interne, comportant un tube principal d'évacuation de gaz, agencé de façon pratiquement coaxial par rapport à la paroi tubulaire, passant à travers la paroi supérieure et présentant son extrémité inférieure positionnée à l'intérieur de l'espace annulaire et au moins une ouverture d'évacuation de liquide, agencée dans la paroi tubulaire et des moyens de conduite d'écoulement pour évacuer séparément le gaz et le liquide de l'espace externe, comportant au moins un tube secondaire d'évacuation du gaz à travers la paroi supérieure et une ouverture d'évacuation du liquide à travers le carter, l'appareil comportant en outre une couche de moyens contrariant l'écoulement pour séparer le liquide du gaz, ladite couche étant agencée au-dessus de l'extrémité supérieure du tube secondaire d'évacuation de gaz, dans lequel le tube principal d'évacuation de gaz s'ajuste étroitement dans une ouverture se prolongeant pratiquement verticalement à travers ladite couche, caractérisé en ce qu'une communication de fluide est prévue pour évacuer pratiquement latéralement le liquide du tube principal d'évacuation de gaz dans la couche de moyens contrariant l'écoulement.

2. Appareil tel que revendiqué dans la revendication 1, dans lequel l'extrémité supérieure du tube principal d'évacuation de gaz est agencée au dessous de l'extrémité supérieure de la couche de moyens contrariant l'écoulement.

3. Appareil tel que revendiqué dans la revendication 1 ou 2, dans lequel la zone supérieure du tube principal d'évacuation de gaz est pourvue d'ouvertures pour évacuer latéralement le liquide dans la couche de moyens contrariant l'écoulement.

4. Appareil tel que revendiqué dans la revendication 3, dans lequel les ouvertures sont pratiquement disposées dans une direction correspondant à la direction d'écoulement de liquide dans le tube principal d'évacuation de gaz.

5. Appareil tel que revendiqué dans l'une quelconque des revendications 1 à 4, dans lequel la couche de moyens contrariant l'écoulement est constituée d'une couche de fils ou de fibres étroitement serrés.

6. Appareil tel que revendiqué dans l'une quelconque des revendications 1 à 4, dans lequel la couche de moyens contrariant l'écoulement est constituée d'une pluralité de parois perforées.

7. Appareil tel que revendiqué dans l'une quelconque des revendications 1 à 4, dans lequel la couche de moyens contrariant l'écoulement est contituée par une ou plus d'une couche de pales inclinées par rapport à la direction principale d'écoulement.

8. Appareil tel que revendiqué dans l'une quelconque des revendications 1 à 7, dans lequel les moyens de conduits d'amenée sont en communication de fluide avec une chambre de mélan- geage pour la préparation et l'alimentation d'un mélange de gaz et de liquide auxdits moyens de conduit d'amenée.

9. Appareil tel que revendiqué dans l'une quelconque des revendications 1 à 8, dans lequel une plaque de répartition d'écoulement est agencée entre l'extrémité supérieure du (ou des tube(s) secondaire(s) d'évacuation du gaz et la couche de moyens contrariant l'écoulement.

10. Appareil tel que revendiqué dans l'une quelconque des revendications 1 à 9, dans lequel une pluralité de parois tubulaires avec des moyens conférant une turbulence et des moyens de conduits d'écoulement sont montés dans ou sur des ouvertures d'un plateau pratiquement horizontal d'une colonne s'étendant pratiquement verticalement afin de traiter des mélanges de liquide et de gaz.

FIG.1

EP 0 124 920 B1

FIG.2